# EUROPÄISCHE PATENTSCHRIFT

(11) **EP 3 873 789 B1**
(45) Veröffentlichungstag und Bekanntmachung des Hinweises auf die Patenterteilung: **28.06.2023**
(21) Anmeldenummer: 19795549.5
(22) Anmeldetag: 29.10.2019
(51) Int. Cl.: B62D 1/183

(54) **LENKWELLE FÜR EINE LENKSÄULE EINES KRAFTFAHRZEUGS UND LENKSÄULE FÜR EIN KRAFTFAHRZEUG**
STEERING SHAFT FOR A STEERING COLUMN OF A MOTOR VEHICLE AND STEERING COLUMN FOR A MOTOR VEHICLE
ARBRE DE DIRECTION POUR UNE COLONNE DE DIRECTION D'UN VÉHICULE AUTOMOBILE ET COLONNE DE DIRECTION POUR UN VÉHICULE AUTOMOBILE

(30) Priorität: 30.10.2018 DE 102018127098
(43) Veröffentlichungstag der Anmeldung: 08.09.2021
(73) Patentinhaber: thyssenkrupp Presta AG, 9492 Eschen (LI); thyssenkrupp AG, 45143 Essen (DE)
(72) Erfinder: GEISELBERGER, Thomas, 9014 St. Gallen (CH); HEIGENHAUSER, Benedikt, 3014 Bern (CH)
(74) Vertreter: thyssenkrupp Intellectual Property GmbH
(86) Internationale Anmeldenummer: PCT/EP2019/079463
(87) Internationale Veröffentlichungsnummer: WO 2020/089199

(56) Entgegenhaltungen:
- US-A1- 2017 369 091

## Beschreibung

Die vorliegende Erfindung betrifft eine Lenkwelle für eine Lenksäule eines Kraftfahrzeugs, umfassend eine Innenwelle und eine Außenwelle, wobei die Innenwelle ein Gleitelement mit einem Außenprofilabschnitt aufweist, die Innenwelle in der Außenwelle zumindest teilweise angeordnet ist und die Außenwelle gegenüber der Innenwelle axial in Richtung einer Längsachse zwischen einer Stauposition und einer Betriebsposition verschiebbar angeordnet ist.

Die vorliegende Erfindung betrifft ferner eine Lenksäule für ein Kraftfahrzeug, umfassend ein inneres Mantelrohr, in dem eine Lenkwelle drehbar gelagert ist, und eine äußere Manteleinheit, in der das innere Mantelrohr gehaltert ist.

Bei autonom steuerbaren Kraftfahrzeugen muss die Möglichkeit eines Wechsels zwischen automatischer und manueller Steuerbarkeit des Fahrzeugs gegeben sein, insbesondere bei Beschleunigung, Bremsung und Lenkung des Fahrzeugs.

Im manuellen Lenkmodus gibt ein Fahrer Lenkbefehle über das Lenkrad in Form eines eingetragenen Lenkmoments, wobei die Lenkbefehle über eine Lenkwelle an die Räder weitergeleitet werden. Eine elektro-mechanische Servoeinheit unterstützt dem Fahrzeugführer im manuellen Lenkmodus, in dem diese ein Hilfsdrehmoment in die Lenkwelle bzw. eine Hilfskraft in das Lenksystem einträgt.

Eine autonome Steuerung der Lenkung erfordert hingegen eine Entkopplung von Lenkrad und weiterer Steuerungseinrichtung. In dem autonomen Fahrmodus, bei dem das Kraftfahrzeug selbstständig fährt, erfolgen auch die Lenkmanöver ohne Eingriff durch den Fahrzeugführer.

Die elektro-mechanische Servoeinheit wird dabei derart von einer Steuereinheit angesteuert, dass die lenkbaren Räder entsprechend so verschwenkt werden, dass das Kraftfahrzeug ein entsprechendes Lenkmanöver ausführt. Dabei soll das Lenkrad jedoch bzgl. der rotatorischen Position stillstehen, also nicht mitdrehen, um Verletzung des Fahrzeugführers zu vermeiden. Es ist üblich, das Lenkrad hierbei in einer zurückgezogenen Position zu verstauen. Insbesondere ist es bei dieser Steuerung wünschenswert, das Lenkrad rotatorisch zu arretieren.

Aus der US 2017/0369091 A1, welche die Merkmale des Oberbegriffs des unabhängigen Anspruchs offenbart, ist eine Lenksäule bekannt, die einen

Wechsel zwischen manueller und autonomer Lenkung ermöglicht. Die Lenkwelle der Lenksäule weist eine Innen- und eine Außenwelle auf, die im manuellen Lenkbetrieb drehmomentschlüssig verbunden und im autonomen Lenkbetrieb entkoppelt sind. Für einen optimalen manuellen Lenkbetrieb der bekannten Lenksäule ist es erforderlich, dass die Außenwelle und die Innenwelle im manuellen Lenkbetrieb spielfrei verbunden sind.

Durch Wechsel zwischen dem manuellen Lenkbetrieb und dem autonomen Lenkbetrieb verschlechtert sich jedoch die spielfreie Verbindung zwischen der Außenwelle und der Innenwelle im manuellen Lenkbetrieb.

Aufgabe der vorliegenden Erfindung ist es daher, eine Lenkwelle nach der eingangs genannten Art sowie eine Lenksäule nach der eingangs genannten Art jeweils zur Verbesserung der spielfreien Verbindung anzugeben.

Gelöst wird die Aufgabe durch die Merkmale des Patentanspruchs 1. Vorteilhafte Weiterbildungen ergeben sich aus den Unteransprüchen.

Die Aufgabe wird hinsichtlich der Lenkwelle dadurch gelöst, dass die Außenwelle ein Lagermittel mit einem Innenprofilabschnitt aufweist, wobei der Innenprofilabschnitt mit dem Außenprofilabschnitt korrespondiert, wobei in der Stauposition der Außenprofilabschnitt zumindest teilweise in dem Lagermittel aufgenommen ist. Danach ist bei der erfindungsgemäßen Lenkwelle in der Stauposition der Außenprofilabschnitt zumindest teilweise, vorzugsweise vollständig, in dem Lagermittel aufgenommen. Dies schont das Material des Gleitelements dadurch, dass dieses sich sowohl in der Stauposition als auch in der Betriebsposition durch den Kontakt mit dem Lagermittel in einem belasteten Zustand befindet. Der ungewollten Verformung und dem Verschleiß des Materials durch den lastfreien Zustand wird demnach vorgebeugt, so dass eine spielfreie Verbindung zwischen der Außenwelle und der Innenwelle in der Betriebsposition gegeben ist, wonach die Außenwelle und die Innenwelle drehmomentschlüssig verbunden sind.

Mit der Stauposition ist insbesondere gemeint, dass die Außenwelle und damit vorzugsweise ein mit der Außenwelle verbundenes Lenkrad auf die Innenwelle derart zubewegt wurde, insbesondere teleskopierbar, also zusammenschiebbar, dass die Außenwelle in einem gegenüber der Betriebsposition geringeren Maße in einen Fahrgastraum des Kraftfahrzeugs hineinragend ist. Somit ist die Länge der Lenkwelle in der Stauposition kürzer als in der Betriebsposition, da diese zusammengeschoben ist.

Mit der Betriebsposition ist insbesondere gemeint, dass die Außenwelle und damit vorzugsweise ein mit der Außenwelle verbundenes Lenkrad von der Innenwelle derart wegbewegt wurde, insbesondere teleskopierbar, dass die Außenwelle in einem gegenüber der Stauposition größeren Maße in einen Fahrgastraum des Kraftfahrzeugs hineinragend ist, um dem Fahrzeuglenker das manuelle Lenken zu erleichtern bzw. zu ermöglichen.

Nach einer weiteren vorteilhaften Ausführungsform der erfindungsgemäßen Lenkwelle ist das Lagermittel um die Längsachse drehbar in der Außenwelle aufgenommen. Durch die drehbare Aufnahme des Lagermittels in der Außenwelle sind die Innenwelle und die Außenwelle bezüglich einer Drehmomentübertragung entkoppelt, wenn das Gleitelement und die Innenwelle in das Lagermittel eingeschoben sind, sich die Lenkwelle also in der Stauposition befindet. So sind Innen- und Außenwelle nicht gemeinsam rotierbar. Bevorzugt ist das Lagermittel in Richtung der Längsachse in der Außenwelle fixiert.

Nach einer weiteren vorteilhaften Ausführungsform der erfindungsgemäßen Lenksäule ist das Lagermittel als Hülse ausgebildet. Dies ist vorteilhaft, weil das Lagermittel dann insbesondere spaltfrei gegenüber der Außenwelle in dieser anordenbar ist.

Nach einer weiteren vorteilhaften Ausführungsform der erfindungsgemäßen Lenkwelle sind Außenwelle und die Innenwelle zur Übertragung eines Drehmoments in der Betriebsposition formschlüssig verbunden bzw. miteinander gekoppelt. Dabei erfolgt die Drehmomentübertragung von der Außenwelle an die Innenwelle oder umgekehrt über das Gleitelement, mit anderen Worten erfolgt der Drehmomentenfluss durch das Gleitelement hindurch. Das formschlüssige Verbinden mit dem Gleitelement der Innenwelle in der Betriebsposition erfolgt vorzugsweise über einen Formschlussabschnitt der Außenwelle. Dies trägt sowohl zur Materialschonung als auch zur Geräuschoptimierung bei. Dabei ist der Formschlussabschnitt durch Umformen der Außenwelle in die Außenwelle eingebracht, wobei das Umformen vorzugsweise nach dem Einbringen des Lagermittels in die Außenwelle erfolgt.

Nach einer weiteren vorteilhaften Ausführungsform der erfindungsgemäßen Lenkwelle weist die Außenwelle einen Formschlussabschnitt zum formschlüssigen Verbinden mit dem Gleitelement der Innenwelle in der Betriebsposition auf. Dies trägt sowohl zur Materialschonung als auch zur Geräuschoptimierung bei. Dabei ist der Formschlussabschnitt vorzugsweise durch Umformen der Außenwelle in die Außenwelle eingebracht, wobei das Umformen der Formschlussabschnitte nach dem Einbringen des Lagermittels in die Außenwelle erfolgt. Die Formschlussabschnitte sind bevorzugt als sickenartige Vertiefungen ausgeführt.

Nach einer weiteren vorteilhaften Ausführungsform der erfindungsgemäßen Lenkwelle ist der Formschlussabschnitt durch Umformen der Außenwelle in die Außenwelle eingebracht. Dabei wird Lagermittel vorzugsweise vor dem Umformen des Formschlussabschnitts in die Außenwelle eingebracht. Im Rahmen der Erfindung ist es denkbar und auch möglich, dass die Außenwelle mehrere Formschlussabschnitt abweist, welche insbesondere in Richtung der Längsachse zueinander beabstandet sind.

Nach einer weiteren vorteilhaften Ausführungsform der erfindungsgemäßen Lenkwelle umfasst das Lagermittel ein Metall oder einen Kunststoff. Besonders bevorzugt ist das Lagermittel aus dem Metall oder dem Kunststoff oder einer Mischung daraus gebildet.

Nach einer weiteren vorteilhaften Ausführungsform der erfindungsgemäßen Lenksäule ist das Gleitelement als Profilhülse ausgebildet, wobei die Profilhülse mit der Innenwelle unbeweglich verbunden ist. Dies verbessert den Wechsel von der Betriebsposition in die Stauposition oder umgekehrt.

Nach einer weiteren vorteilhaften Ausführungsform der erfindungsgemäßen Lenkwelle ist das Gleitelement als Umspritzung der Innenwelle ausgebildet. So unterstützt die Profilhülse das formschlüssige Verbinden mit dem Lagermittel, insbesondere im Falle einer Ausgestaltung dessen als Hülse, ohne eine weitere Kopplung mit der Innenwelle zu benötigen, wonach Materialverschleiß und/oder Instabilitäten der erfindungsgemäßen Lenkwelle vorgebeugt werden.

Nach einer weiteren vorteilhaften Ausführungsform der erfindungsgemäßen Lenkwelle weist das Lagermittel mindestens ein Positioniermittel zum bündigen Positionieren des Außenprofilabschnitts mit dem Innenprofilabschnitt entlang der Längsachse auf. Dies ist vorteilhaft, weil sich dadurch die Ausrichtung des Lagermittels gegenüber dem Gleitmittel verbessert wird.

Wenn das Positioniermittel als Vorsprung ausgebildet ist, wird dies noch weiter verbessert.

Nach einer weiteren vorteilhaften Ausführungsform der erfindungsgemäßen Lenkwelle ist die Außenwelle in einem Raststern für ein Lenkschloss angeordnet. Dies verbessert die Arretierung der Außenwelle gegenüber Missbrauchskräften.

Wenn der Raststern ein Hohlprofil mit einer Längsachse und mehreren Rastausnehmungen aufweist, wobei die Rastausnehmungen mit einem in Verriegelungs- oder Entriegelungsstellung überführbaren Sperrriegel des Lenkschlosses in Eingriff bringbar sind, wird die Arretierung der Außenwelle gegenüber Missbrauchskräften noch weiter verbessert.

Die Aufgabe wird hinsichtlich der Lenksäule dadurch gelöst, dass die Lenkwelle nach einem oder mehreren der beigefügten Ansprüche und/oder hier offenbarten Ausführungsformen ausgebildet ist.

Ergänzend oder alternativ weist die erfindungsgemäße Lenksäule, welche insbesondere für ein Kraftfahrzeug vorgesehen ist, eine in einem oberen Mantel drehbar gelagerte Lenkwelle auf, wobei ein Kopplungselement mit der Lenkwelle drehfest gekoppelt ist, welches zumindest ein Formschlusselement aufweist, wobei der obere Mantel in einem unteren Mantel verschiebbar aufgenommen ist und zwischen einer ersten Position und einer zweiten Position verschiebbar ist, wobei am unteren Mantel ein Arretierelement beweglich angeordnet ist, welches mit dem Formschlusselement in der ersten Position in Eingriff steht und in der zweiten Position außer Eingriff steht. Durch den zweiteiligen Aufbau der durch Arretierelement und Kopplungselement gebildeten Verriegelungsvorrichtung, bei der ein Teil - das Arretierelement - am unteren Mantels angeordnet ist, ermöglicht eine platzsparende Ausführung des Mantelquerschnitts. Bevorzugt ist das Arretierelement radial beweglich am unteren Mantel angeordnet. Dies ermöglicht eine besonders platzsparende Ausführung von oberen und unteren Mantel, da kein Raum für eine azimuthale oder axiale Bewegbarkeit des Arretierelements benötigt wird - das Arretierelement ist lediglich eine Bewegung entlang einer Oberflächennormalen des oberen Mantels ausführend. Eine Arretierung des Lenkrades ist für den Fahrer mit der erfindungsgemäßen Lenksäule einfach über das Überführen des oberen Mantels und Lenkrades von einer ausgezogenen, zweiten Position, auch Betriebsposition genannt, in eine zurückgezogene, erste Position, auch Verstauposition genannt, möglich.

Es ist weiterhin vorgesehen, dass die Lenkwelle eine Außenwelle und eine Innenwelle umfasst, wobei diese in der ersten Position zueinander verdrehbar sind und in der zweiten Position miteinander drehmomentschlüssig gekoppelt sind.

Diese Ausführung ermöglicht sowohl eine autonome Steuerung des Kraftfahrzeugs, bei Entkopplung der beiden Wellen in der ersten Position, als auch eine manuelle Steuerung, bei gekoppelter Innen- und Außenwelle, in der zweiten Position. Außerdem erleichtert sie eine genaue Positionierung des Formschlusselements zum Arretierelement, wobei der Eingriff des Arretierelements in das Formschlusselement gerade einer Geradeausstellung der Räder entsprechen sollte.

Gemäß einer weiteren Ausführungsform der Erfindung weist der obere Mantel eine Ausnehmung auf, durch die das Arretierelement in der ersten Position hindurchragt. Dies ermöglicht das in Eingriff bringen von Formschlusselement und Arretierelement durch eine lediglich axiale Verschiebung des oberen Mantels.

Es ist außerdem vorgesehen, dass das Arretierelement zumindest eine Steuerfläche aufweist, die mit einer Gegensteuerfläche des oberen Mantels derart zusammenwirkt, dass das Arretierelement durch eine Verschiebung des oberen Mantels gegenüber dem unteren Mantel in Eingriff oder außer Eingriff mit dem Formschlusselement gebracht wird. Insbesondere weist die Steuerfläche einen Winkel zwischen 10° und 75° zu der Gegensteuerfläche auf. Durch das Ermöglichen der Ausbildung einer das Arretierelement anhebenden, radialen Kraftkomponente, erleichtert diese Ausführung das außer Eingriff bringen von Arretierelement und Formschlusselement.

Bevorzugt ist das Arretierelement mit polyederförmiger, insbesondere pyramidenstupfförmiger, oder kegelstumpfförmiger Geometrie ausgebildet, insbesondere mit an der Mantelfläche des Arretierelements gebildeter Steuerfläche, was das Zusammenwirken von Gegensteuerfläche und Steuerfläche, insbesondere beim außer Eingriff bringen von Formschlusselement und Arretierelement, weiter verbessert.

In einer weiteren Ausführungsform der Erfindung ist es vorgesehen, dass das Arretierelement durch eine Feder vorgespannt ist.

Ein Entspannen der Feder ist gerade bei einer Verriegelungsbewegung des Arretierelement, also beim in Eingriff bringen mit dem Formschlusselement, ermöglicht. Die Vorspannung der Feder muss demnach zum außer Eingriff bringen von Arretierelement und Formschlusselement wieder aufgebracht werden, wodurch ein verdrehsicherer Eingriff des Arretierelements in das Formschlusselement ermöglicht ist, der eine Kompensierung von Drehmomente größer als 300Nm im Verriegelungszustand ermöglicht.

Es ist außerdem vorgesehen, dass zwischen der Innen- und der Außenwelle der Lenkwelle Profilhülsen oder eine Umspritzung angeordnet sind. Diese erlauben bei vergleichsweise einfacher Fertigung eine stabile Verbindung von Innen- und Außenwelle bei manueller Lenkung in der zweiten Position. Da ein Kontakt der Wellen nur an den Profilhülsen stattfindet, müssen bei Verschleiß lediglich die Profilhülsen ausgetauscht werden.

Es ist außerdem vorgesehen, dass das Kopplungselement als Raststern ausgebildet ist. Die Ausführung mit Rastungen ist einen der Rastung entsprechenden azimutalen Rastwinkel der Außenwelle festlegend, bevorzugt in Geradeausstellung. Sie erlaubt eine betriebssichere, drehfeste Kopplung von Kopplungselement und Außenwelle und bei Eingriff des Arretierelements in das Kopplungselement, eine sichere axiale Führung des Arretierelements.

Gemäß einer weiteren Ausführungsform ist sich das Formschlusselement über eine axiale Länge des Kopplungselements erstreckend. Dies ermöglicht ein tieferes Einführen des oberen Mantels in den unteren Mantel nach Ineingriffbringung von Arretierelement und Formschlusselement. Damit ist es sehr vorteilhaft ermöglicht, dass die Entkopplung von Innenwelle und Außenwelle im bereits verriegelten Zustand der Außenwelle stattfindend ist. Dies wiederum stellt die azimutale Positionierung des Lenkrads im arretierten Zustand, die einer Geradeausstellung der Räder entsprechen sollte, sicher.

Außerdem ist es vorgesehen, dass das Formschlusselement als rechteckige Nut ausgebildet. Damit ist eine vergleichsweise einfache Ausführung des Arretierelements, bei stabilem Eingriff und sicherer Führung ermöglicht.

Bevorzugt ist zwischen dem oberen Mantel und dem unteren Mantel ein motorischer Verstellantrieb angeordnet, wobei dieser Verstellantrieb derart ausgebildet ist, um den oberen Mantel und den unteren Mantel zwischen der ersten Position und der zweiten Position hin und her zu bewegen.

In einer alternativen Ausführungsform kann es vorgesehen sein, dass der obere Mantel gegenüber dem unteren Mantel manuell verstellbar ist, wobei weiters eine Fixiereinrichtung vorgesehen ist, die zwischen einer Freigabestellung und einer Fixierstellung umschaltbar ist, wobei in der Freigabestellung der obere Mantel gegenüber dem unteren Mantel verstellbar ist und in der Fixierstellung der obere Mantel gegenüber dem unteren Mantel festgesetzt ist.

Zwischen dem oberen Mantel und dem unteren Mantel kann eine Energieabsorptionseinrichtung vorgesehen sein, wobei diese derart ausgebildet ist, um im Fall eines unfallbedingten Fahrzeugscrashs Energie kontrolliert zu absorbieren.

Die Erfindung wird im Folgenden unter Bezugnahme auf Zeichnungen beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen.

Die Figuren der Zeichnung zeigen im Einzelnen:
Figur 1: eine schematische Darstellung eines Lenksystems;
Figur 2: eine perspektivische Darstellung einer erfindungsgemäßen Lenksäule;
Figur 3: eine erfindungsgemäße Lenksäule im Längsschnitt im Zustand für den manuellen Betrieb (Betriebsposition);
Figur 4: Lenksäule aus Figur 3 im Querschnitt durch den oberen Mantel;
Figur 5: Lenksäule gemäß Figur 3 im Längsschnitt im Zustand für autonomen Betrieb (Verstauposition);
Figur 6: Ausschnitt aus Figur 5 mit verriegeltem Arretierelement;
Figur 7: Komponentendarstellung von Innen- und Außenwelle.

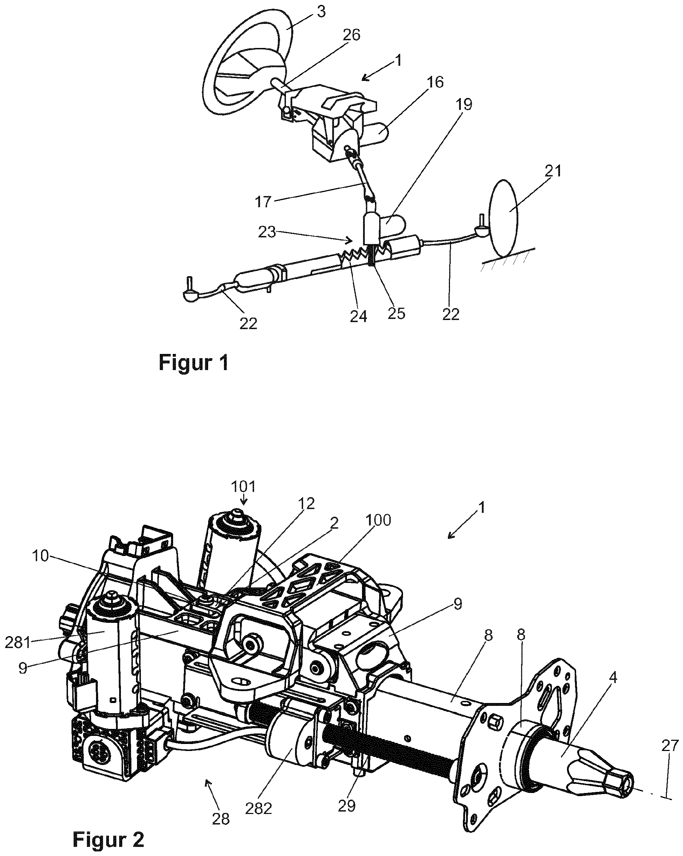

**Figur 1** zeigt eine schematische Darstellung eines Lenksystems für ein Kraftfahrzeug. Dieses umfasst eine Lenksäule 1, die über eine Lenkzwischenwelle 17 mit einem Lenkgetriebe 23 verbunden ist. Die Lenksäule 1 weist eine Lenkwelle 26, an deren bezogen auf die Fahrtrichtung hinteren Ende ein Lenkrad 3 angebracht ist. Die Lenkwelle 26, umfassend eine Außenwelle 4 und eine Innenwelle 5, ist mit einer Lenkzwischenwelle 17 drehmomentenschlüssig gekoppelt, wobei diese Lenkzwischenwelle 17 weiters mit einem Lenkgetriebe 23 gekoppelt ist. Der als elektro-mechanische Servoeinheit ausgebildete Lenkungsantrieb 16, 19 umfasst einen Stellmotor und kann an verschiedenen Stellen des Lenksystems angeordnet sein, beispielsweise an der Lenksäule 1 oder an dem Lenkgetriebe 23, wobei in der Regel lediglich nur ein Lenkungsantrieb in Form einer elektro-mechanischen Servoeinheit vorgesehen ist. Ein Lenkungs-Stellmoment wird über ein Ritzel 25 und eine Zahnstange 24 in eine Translationsbewegung von Spurstangen 22 umgesetzt, wodurch ein Lenkeinschlag der gelenkten Räder 21 bewirkt wird.

**Figur 2** zeigt eine perspektivische Darstellung einer eingebauten Ausführungsform einer erfindungsgemäßen Lenksäule 1. Ein oberer Mantel 8, der als Innenmantel ausgebildet ist, ist in einen unteren Mantel 9, der als Außenmantel ausgebildet ist, einführbar, wodurch ein Verstauen eines hier nicht dargestellten Lenkrades 3 in einer zurückgezogenen ersten Position ermöglicht ist. Im verstauten Zustand ist der obere Mantel 8 weitestgehend in den unteren Mantel 9 eingeführt. Zur axialen Verschiebung des oberen Mantels 8 ist ein Längsverstellantrieb 28 vorgesehen, der eine Gewindestange 29 antreibend ist. Der Längsverstellantrieb 28 umfasst einen Elektromotor 281 und eine Getriebeeinheit 282. Das Lenkrad 3 ist mit einer Außenwelle 4 einer Lenkwelle koppelbar, die innerhalb des oberen Mantels 8 drehbar gelagert ist und bei Drehung um eine Rotationsachse 27 rotierbar ist. In der verstauten Position der Lenksäule ist deren Drehbarkeit über eine, ein Arretierelement 10 aufweisende Verriegelungsvorrichtung 2 blockiert. Das Arretierelement 10 ist über eine Feder 12 am unteren Mantel 9 angeordnet und in diesem verschiebbar in eine Richtung orthogonal zur Rotationsachse 27 geführt.

Der untere Mantel 9 ist bevorzugt durch eine Konsole 100 getragen, wobei die Konsole mit dem Kraftfahrzeug verbindbar ist. Zwischen der Konsole 100 und dem unteren Mantel 9 ist ein motorischer Höhenverstellantrieb 101 vorgesehen, der derart eingerichtet ist, um den Mantel 9 gegenüber der Konsole 100 um eine Schwenkachse zu verschwenken und somit eine Höhenverstellung zu realisieren.

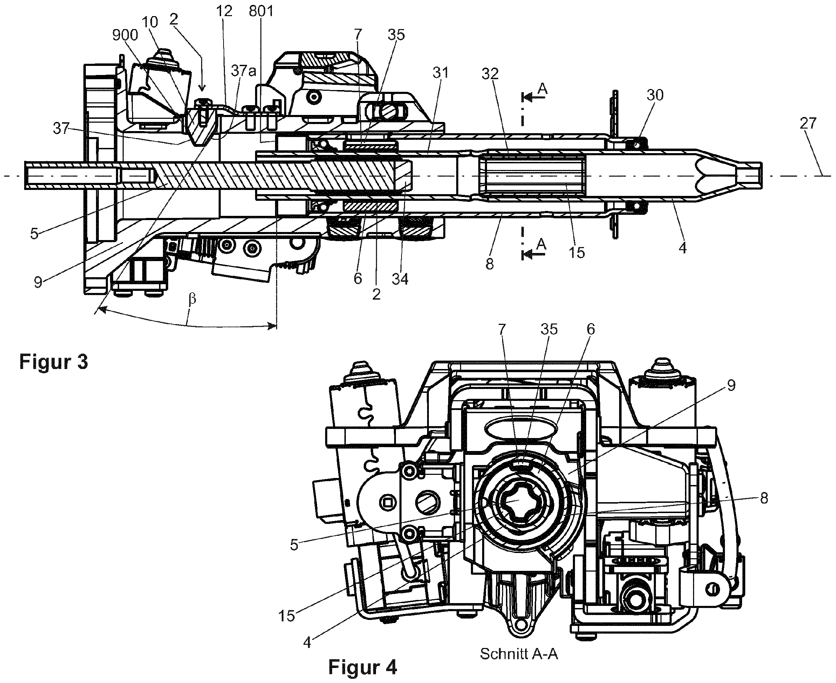

In der **Figur 3** ist eine Ausführungsform einer erfindungsgemäßen Lenksäule 1 im Längsschnitt im Zustand für den manuellen Betrieb in einer Betriebsposition dargestellt, entsprechend der zweiten Position des oberen Mantels 8, dargestellt. In diesem Zustand befindet sich die Lenksäule, besser gesagt der obere Mantel 8 in einer nicht-verstauten Position, der obere Mantel 8 ist gegenüber dem unteren Mantel 9 ausgefahren. Die Außenwelle 4 der Lenkwelle ist über ein Lager 30 innerhalb des oberen Mantels 8 drehbar gelagert, wobei das Lager 30 als Wälzlager ausgebildet ist. Ebenfalls innerhalb des oberen Mantels 8 ist eine Innenwelle 5 angeordnet. Diese ist an einem axialen Ende 34 in einem ersten Abschnitt 31 der Außenwelle 4 angeordnet und mit dieser lösbar verbindbar.

Im dargestellten manuellen Betriebszustand der Lenksäule 1 sind Außenwelle 4 und Innenwelle 5 drehmomentschlüssig verbunden, sodass beide bei Drehung des Lenkrads 3 um eine gemeinsame Rotationsachse 27 rotierend sind. Innerhalb eines zweiten Teils 32 der Außenwelle 4 ist eine Hülse 15 koaxial angeordnet, wobei diese in der Außenwelle 4 aufgenommen ist. Als weiterer Teil der Verriegelungsvorrichtung 2 ist an der Außenwelle 4 ein Kopplungselement 6 angeordnet, welches die Außenwelle 4 radial umgebend ist. Das Arretierelement 10 ist über eine Feder 12 vorgespannt und im nichtverriegelten Zustand, das heißt, wenn Arretierelement 10 und Kopplungselement 6 nicht in Eingriff gebracht sind. Das Arretierelement 10 ist in einer Öffnung 900 des Außenmantels 9 verschiebbar geführt. **Figur 4** zeigt die Lenksäule 1 aus Figur 3 im Querschnitt entlang der Linie A - A, die in der Figur 3 eingezeichnet ist. Dargestellt sind die radial teilweise ineinander angeordnete Außen- und Innenwelle 4, 5, sowie der sie umgebende obere Mantel 8 und der diesen axial teilweise umgebende untere Mantel 9. Dargestellt ist ebenfalls die Hülse 15, die derart gefertigt ist, dass sie die Innenwelle 5 bei Einführen der Innenwelle 5 in die Außenwelle 4 drehfest aufnehmbar ist. In der dargestellten Ausführungsform ist das Kopplungselement 6 als Raststern ausgebildet und die Außenwelle 4 radial umgebend. Ein Formschlusselement 7 ist in Form einer rechteckigen Nut 35 am Kopplungselement 6 ausgeführt. Der Raststern kann bevorzugt als Strangpressbauteil oder Umformbauteil ausgebildet sein.

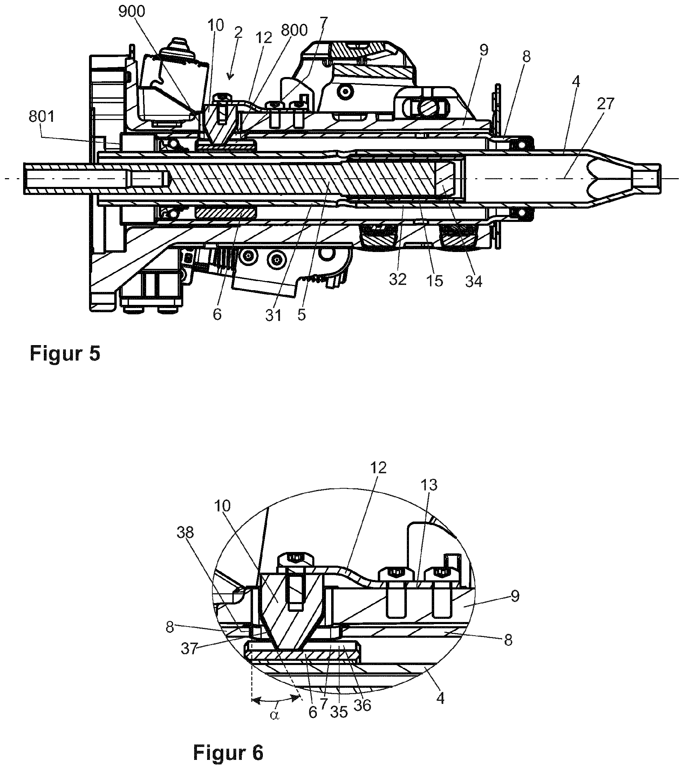

In der **Figur 5** ist die Lenksäule der Figur 3 im Längsschnitt im Zustand für den autonomen Betrieb dargestellt. In dieser Darstellung ist der obere Mantel 8 in verstauter Position und die Lenkwelle in verriegelter und entkoppelter Stellung. Der obere Mantel 8 ist in den unteren Mantel 9 eingeschoben. Damit ist das axiale Ende 34 der Innenwelle 5 nunmehr in einem zweiten Abschnitt 32 der Außenwelle angeordnet und ist dort in die Hülse 15 eingeführt und drehfest mit ihr verbunden. Eine Drehung der Innenwelle 5 ist nun eine Drehung der Hülse 15 verursachend, die durch das wirkende Drehmoment wiederum relativ zur Außenwelle 4 drehbar ist. Eine Drehung von Außen- und Innenwelle 4, 5 ist demnach in der dargestellten Position entkoppelt voneinander, so dass die Außenwelle 4 relativ zur Innenwelle 5 verdrehbar ist. Die Innenwelle 5 wird während eines Lenkmanövers durch die Servoeinheit in Form eines Lenkungsantrieb rotiert. Dank der erfindungsgemäßen Lösung rotiert jedoch die Außenwelle nicht mit. Diese steht rotatorisch still. Die Innenwelle 5 rotiert dabei zusammen mit der Hülse 15, wobei diese sich relativ zur Außenwelle 4 verdreht. Durch die axiale Verschiebung des oberen Mantels 8 und der Außenwelle 4 relativ zum unteren Mantel 9 und der Innenwelle 5 ist das Kopplungselement 6 auf axiale Höhe mit dem Arretierelement 10 gebracht. Der obere Mantel 8 weist entsprechend an der axialen Position des Kopplungselements 6 eine Ausnehmung in Form einer Öffnung 800 auf. Diese ermöglicht ein Eingreifen des Arretierelements 10 in das Kopplungselement 6.Das Arretierelement 10 ragt somit im verriegelten Zustand, wie in Figur 5 und 6 dargestellt, durch die Öffnung 900 des unteren Mantels 9 und durch die Öffnung 800 des unteren Mantels 8.Das Arretierelement 10 ist in dieser Darstellung als Arretierbolzen mit pyramiden- bzw. kegelstumpfförmiger Geometrie ausgefertigt und in das Formschlusselement 7 eingreifend, wodurch das Kopplungselement 6 verriegelt ist und die Außenwelle 4 nicht länger drehbar ist. Das Lenkrad ist demnach verriegelt, die Innenwelle 5 aber weiterhin drehbar, was eine Weiterleitung eines, nun automatisch generierten, Lenkbefehls durch die Servoeinheit an die Räder weiterhin ermöglichend ist. Der Eingriff des Arretierelements 10 in das Formschlusselement 7 und damit die Verriegelung des Lenkrads ist vor der Entkopplung von Innen- und Außenwelle 5, 4 stattfindend, wodurch die azimutale Stellung der verriegelten Komponenten, insbesondere des Lenkrads, in einer Position festlegbar ist, die, bei manueller Lenkung, einer Geradeausstellung der Räder entspricht.

**Figur 6** zeigt einen Ausschnitt aus Figur 5 mit verriegeltem Arretier- und Kopplungselement 10, 6. Durch die Vorspannung der Feder 12 und deren Pressen gegen eine am oberen Mantel 8 angeordnete Gegenfläche 13 in der zweiten, unverstauten Position ist eine Federkraftkomponente radial nach innen wirkend, also in Richtung auf die Lenkwelle bzw. Innenwelle 5 zu wirkend. Der obere Mantel 8 weist an der Stirnfläche eine erste Steuerfläche 801 auf, wobei es sich um jene Stirnfläche handelt, die im unteren Mantel 9 aufgenommen ist. Beim Einschieben des oberen Mantels 8 in den unteren Mantel 9 wird die Ausnehmung 800 auf axiale Höhe des Arretierelements 10 gebracht. Der vorgespannten Feder 12 ist es damit ermöglicht, sich durch eine radiale, in orthogonale Richtung der Rotationsachse 27 gerichtete Bewegung des Arretierelements 10 in die Ausnehmung 800 des oberen Mantels 8 zu entspannen. Die radial nach innen gerichtete Bewegung des Arretierelements 10 führt zu einem in Eingriff bringen des Arretierelements 10 mit dem Formschlusselement 7, welches in der gezeigten Ausführungsform als Nut 37 ausgebildet ist. Dadurch wird das Arretierelement 10 auch bei Einwirken eines Drehmoments auf das Kopplungselement 6 in der verriegelten Position gehalten- das Kopplungselement 6 ist nicht länger drehbar und somit ist auch die Außenwelle nicht verdrehbar. Die relativ zu einer Oberfläche 36 des Kopplungselements 6 schräge Ausführung von durch die Mantelfläche des Arretierelements 10 gebildete Steuerfläche 37 erleichtert ein Lösen der Arretierung bei Überführung des oberen Mantels 8 in die zweite, ausgefahrene Position. Eine Gegensteuerfläche 38 des oberen Mantels 8, gegen die das Arretierelement 10 beim Ausfahren des oberen Mantels 8 drückend ist, ist nicht parallel zur kontaktierten Steuerfläche 37 des Arretierelements 10, gezeigt ist eine vorteilhafte Ausführung, in der Steuerfläche 37 und Gegensteuerfläche 38 zueinander im stumpfen Winkel α, insbesondere im Winkel α zwischen 10° und 75°, angeordnet sind. Damit ist eine Kraft erleichtert radial nach außen ableitbar, was ein Anheben des Arretierelements 10 über das Aufbringen der Vorspannung Spannung der Feder 12 hervorrufend ist, womit Arretierelement 10 und Formschlusselement 7 wieder außer Eingriff bringbar sind. Beim Einschieben des oberen Mantels 8 in den unteren Mantel 9 wirkt eine zweite Steuerfläche 37a des Arretierelements 10 mit der Steuerfläche 801 des oberen Mantels 8 zusammen, so dass beim Einschieben des oberen Mantels 8 das Arretierelement 10 mit der zweiten Steuerfläche 37a gegen die Steuerfläche 801 des Mantels 8 gedrückt wird und somit das das Arretierelement 10 in eine Richtung orthogonal zur Rotationsachse 27 zu bewegen. Die Steuerfläche 37a und die Steuerfläche 801 des Mantels 8 sind in einem Winkel zueinander angeordnet, wobei der Winkel bevorzugt einen Wert zwischen 10° und 75° aufweist.

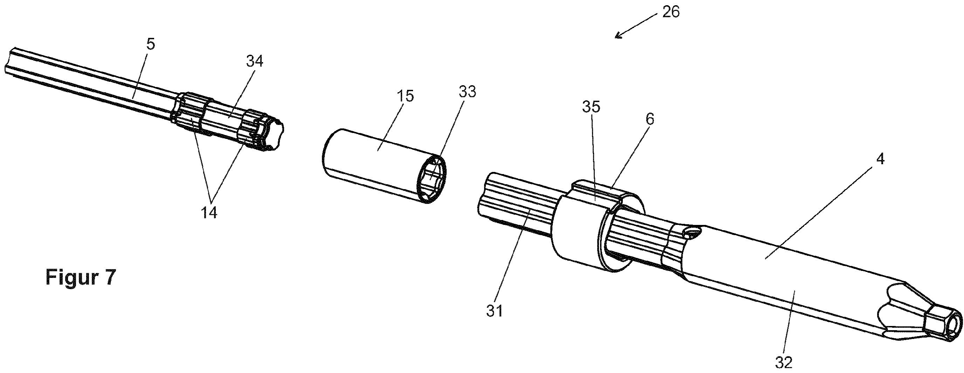

**Figur 7** zeigt die Lenkwelle 26 in einer teilweise auseinandergezogenen Darstellung, wobei diese die Innenwelle 5 und Außenwelle 4 mit dem als Raststern ausgebildeten Kopplungselement 6 aufweist. In der gezeigten Ausführungsform wird die Kopplung der Innen- und Außenwelle 5, 4 im manuellen Betrieb, sowie deren Entkopplung bei Kopplung der Innenwelle mit der Hülse 15 deutlich. Die beiden Abschnitte 31, 32 der Außenwelle 4 weisen jeweils unterschiedliche Profile und Innenradien auf, dabei ist der zweite Abschnitt 32 kreisrohrförmig aufgebaut und der erste Abschnitt 31 in Form einer Polygonwelle. Die Innenwelle 5 ist ebenfalls als Polygonwelle ausgebildet. Die Innenwelle 5 radial umgebend sind weiterhin zwei Profilhülsen 14 angeordnet, deren äußerer Mantel die Polygonform der Innenwelle 5 abbildend ist. Es kann jedoch auch vorgesehen sein, dass lediglich eine einzige Profilhülse zum Einsatz kommt, die an der Innenwelle fixiert ist. Die Profilhülse bzw. Profilhülsen sind bevorzugt aus einem Kunststoff gebildet. Im manuellen Betrieb befindet sich das axiale Ende 34 der Innenwelle 5 im ersten Abschnitt 31 der Außenwelle 4. Die Bereiche, an denen die Innenwelle 5 von den Profilhülsen 14 umgeben ist, weisen entsprechend einer Breite der Profilhülsen 14 vergrößerte Umfänge auf. Da ein Außenradius der Profilhülse 14 größer ist als ein innerer Radius des ersten Abschnitts 31 der Außenwelle 4, ist die Innenwelle 5 mit den Profilhülsen 14 nicht gegen die Außenwelle 4 drehbar. Beide sind drehfest gekoppelt, was Voraussetzung für den manuellen Betrieb der Lenksäule ist. Die Hülse 15 ist innerhalb des zweiten Abschnitts 32 der Außenwelle 4 gelagert. Die Hülse 15 weist ein inneres Hülsenprofil 33 auf, welches einem inneren Profil des ersten Abschnitts 31 der Außenwelle 4 entspricht. Bei Verstauung des Lenkrades findet ein tieferes Einschieben der Innenwelle 5 in die Außenwelle 4 statt und das axiale Ende 34 ist im zweiten Abschnitt 32 der Außenwelle 4 angeordnet - die Innenwelle 5 wird in die Hülse 15 eingeführt. Die Profilhülsen 14 sind nun einen Formschluss mit dem inneren Hülsenprofil 33 bildend und Innenwelle 5 und Hülse 15 sind drehfest verbunden. Da die Hülse 15 lediglich gleitend in der Außenwelle 4 gelagert ist, ist die Hülse bei Drehung der Innenwelle 5 relativ zur Außenwelle 4 drehbar und die Drehung von Innen- und Außenwelle 5, 4 ist entkoppelt. Mit anderen Worten ist die Hülse 15 in der Außenwelle gleitgelagert. Durch den nunmehr profilhülsenfreien Abschnitt der Innenwelle 5 innerhalb des ersten Abschnitts 31 der Außenwelle 4 ist zwischen beiden kein Formschluss mehr stattfindend und eine relative Drehung ist ermöglicht. In der dargestellten bevorzugten Ausführungsform ist das Kopplungselement 6 die Außenwelle 4 radial umgebend und drehfest mit dieser verbunden. Weiterhin ist die rechteckige Nut 35 des Formschlusselements 7 sich über eine axiale Länge des Kopplungselements 6 erstreckend. Dies ermöglicht ein tieferes Einführen der Innenwelle 5 in die Außenwelle 4 im bereits verriegelten Zustand von Arretierelement 10 und Kopplungselement 6. Dadurch ist ein erst nach der Verriegelung stattfindendes Entkoppeln von Innen- und Außenwelle 5, 4 ermöglicht. Die in der Figur 7 dargestellte Außenwelle 4 ist die Außenwelle 4, nachdem der erste Abschnitt 31 mit dem Formschlussprofil in der Außenwelle 4 eingeformt wurde, wobei lediglich zur besseren Darstellung die Hülse 15 außerhalb der Außenwelle 4 dargestellt ist. Die Hülse 15 wird vor dem Einformen des Formschlussprofils des Abschnitts 31 in die Außenwelle gefügt.

## Patentansprüche

1. Lenkwelle für eine Lenksäule (1) eines Kraftfahrzeugs, umfassend eine Innenwelle (5) und eine Außenwelle (4), wobei die Innenwelle (5) ein Gleitelement (14) mit einem Außenprofilabschnitt aufweist, die Innenwelle (5) in der Außenwelle (4) zumindest teilweise angeordnet ist und die Außenwelle (4) gegenüber der Innenwelle (5) axial in Richtung einer Längsachse (27) zwischen einer Stauposition und einer Betriebsposition verschiebbar angeordnet ist, **dadurch gekennzeichnet, dass** die Außenwelle (4) ein Lagermittel (15) mit einem Innenprofilabschnitt (33) aufweist, wobei der Innenprofilabschnitt (33) mit dem Außenprofilabschnitt korrespondiert, wobei in der Stauposition der Außenprofilabschnitt zumindest teilweise in dem Lagermittel (15) aufgenommen ist.

2. Lenkwelle nach Anspruch 1, **dadurch gekennzeichnet, dass** das Lagermittel (15) um die Längsachse drehbar in der Außenwelle (4) aufgenommen ist.

3. Lenkwelle nach einem der vorhergehenden Ansprüche, **dadurch gekennzeichnet, dass** das Lagermittel (15) als Hülse (15) ausgebildet ist.

4. Lenkwelle nach einem der vorhergehenden Ansprüche, **dadurch gekennzeichnet, dass** die Außenwelle (4) und die Innenwelle (5) zur Übertragung eines Drehmoments in der Betriebsposition formschlüssig verbunden sind.

5. Lenkwelle nach einem der vorhergehenden Ansprüche, **dadurch gekennzeichnet, dass** dieAußenwelle (4) einen Formschlussabschnitt (31) zum formschlüssigen Verbinden mit dem Gleitelement (14) der Innenwelle (5) in der Betriebsposition aufweist.

6. Lenkwelle nach Anspruch 5, **dadurch gekennzeichnet, dass** der Formschlussabschnitt (31) durch Umformen der Außenwelle (4) in die Außenwelle (4) eingebracht ist.

7. Lenkwelle nach einem der vorhergehenden Ansprüche, **dadurch gekennzeichnet, dass** das Lagermittel (15) ein Metall oder einen Kunststoff umfasst.

8. Lenkwelle nach einem der vorhergehenden Ansprüche, **dadurch gekennzeichnet, dass** das Gleitelement (14) als Profilhülse (14) ausgebildet ist, wobei die Profilhülse (14) mit der Innenwelle (5) unbeweglich verbunden ist.

9. Lenkwelle nach einem der vorhergehenden Ansprüche, **dadurch gekennzeichnet, dass** das Gleitelement (14) als Umspritzung der Innenwelle ausgebildet ist.

10. Lenkwelle nach einem der vorhergehenden Ansprüche, **dadurch gekennzeichnet, dass** das Lagermittel (15) mindestens ein Positioniermittel (33) zum bündigen Positionieren des Außenprofilabschnitts (33) mit dem Innenprofilabschnitt (33) entlang der Längsachse (27) aufweist.

11. Lenkwelle nach Anspruch 10, **dadurch gekennzeichnet, dass** das Positioniermittel (33) als Vorsprung ausgebildet ist.

12. Lenkwelle nach einem der vorhergehenden Ansprüche, **dadurch gekennzeichnet, dass** die Außenwelle (4) in einem Raststern (6) für ein Lenkschloss angeordnet ist.

13. Lenkwelle nach Anspruch 12, **dadurch gekennzeichnet, dass** der Raststern (6) ein Hohlprofil mit einer Längsachse und mehreren Rastausnehmungen (35) aufweist, wobei die Rastausnehmungen (35) mit einem in Verriegelungs- oder Entriegelungsstellung überführbaren Sperrriegel des Lenkschlosses in Eingriff bringbar sind.

14. Lenksäule (1) für ein Kraftfahrzeug, umfassend ein inneres Mantelrohr (8), in dem eine Lenkwelle (4,5) drehbar gelagert ist, und eine äußere Manteleinheit (9), in der das innere Mantelrohr (8) gehaltert ist, **dadurch gekennzeichnet, dass** die Lenkwelle (4,5) nach einem der Ansprüche 1 bis 13 ausgebildet ist.

## Claims

1. A steering shaft for a steering column (1) of a motor vehicle, comprising an inner shaft (5) and an outer shaft (4), wherein the inner shaft (5) has a sliding element (14) having an outer profile portion, the inner shaft (5) is at least partially arranged in the outer shaft (4) and the outer shaft (4) is arranged so as to be able to be displaced with respect to the inner shaft (5) axially in the direction of a longitudinal axis (27) between a storage position and an operating position, **characterized in that** the outer shaft (4) has a bearing means (15) having an inner profile portion (33), wherein the inner profile portion (33) corresponds to the outer profile portion, wherein in the storage position the outer profile portion is at least partially received in the bearing means (15).

2. The steering shaft as claimed in claim 1, **characterized in that** the bearing means (15) is received in the outer shaft (4) so as to be able to be rotated about the longitudinal axis.

3. The steering shaft as claimed in either of the preceding claims, **characterized in that** the bearing means (15) is constructed as a sleeve (15).

4. The steering shaft as claimed in one of the preceding claims, **characterized in that** the outer shaft (4) and the inner shaft (5) are connected in a positive-locking manner in order to transmit a torque in the operating position.

5. The steering shaft as claimed in one of the preceding claims, **characterized in that** the outer shaft (4) has a positive-locking portion (31) for positive-locking connection to the sliding element (14) of the inner shaft (5) in the operating position.

6. The steering shaft as claimed in claim 5, **characterized in that** the positive-locking portion (31) is introduced into the outer shaft (4) by shaping the outer shaft (4).

7. The steering shaft as claimed in one of the preceding claims, **characterized in that** the bearing means (15) comprises a metal or a plastics material.

8. The steering shaft as claimed in one of the preceding claims, **characterized in that** the sliding element (14) is constructed as a profile sleeve (14), wherein the profile sleeve (14) is connected to the inner shaft (5) in a non-movable manner.

9. The steering shaft as claimed in one of the preceding claims, **characterized in that** the sliding element (14) is constructed as an overmolding of the inner shaft.

10. The steering shaft as claimed in one of the preceding claims, **characterized in that** the bearing means (15) has at least one positioning means (33) for the flush positioning of the outer profile portion (33) with the inner profile portion (33) along the longitudinal axis (27).

11. The steering shaft as claimed in claim 10, **characterized in that** the positioning means (33) is constructed as a projection.

12. The steering shaft as claimed in one of the preceding claims, **characterized in that** the outer shaft (4) is arranged in a latching star-like member (6) for a steering lock.

13. The steering shaft as claimed in claim 12, **characterized in that** the latching star-like member (6) has a hollow profile having a longitudinal axis and a plurality of locking recesses (35), wherein the locking recesses (35) can be brought into engagement with a locking bar of the steering lock which can be moved into the locking or unlocking position.

14. A steering column (1) for a motor vehicle, comprising an inner covering pipe (8), in which a steering shaft (4, 5) is rotatably supported, and an outer covering unit (9), in which the inner covering pipe (8) is retained, **characterized in that** the steering shaft (4,5) is constructed as claimed in one of claims 1 to 13.

## Revendications

1. Arbre de direction pour une colonne de direction (1) d'un véhicule automobile, comprenant un arbre intérieur (5) et un arbre extérieur (4), l'arbre intérieur (5) présentant un élément coulissant (14) avec une section profilée extérieure, l'arbre intérieur (5) étant agencé au moins partiellement dans l'arbre extérieur (4) et l'arbre extérieur (4) étant agencé de manière à pouvoir être déplacé axialement par rapport à l'arbre intérieur (5) dans la direction d'un axe longitudinal (27) entre une position de rangement et une position de fonctionnement, **caractérisé en ce que** l'arbre extérieur (4) présente un moyen de palier (15) avec une section profilée intérieure (33), la section profilée intérieure (33) correspondant à la section profilée extérieure, la section profilée extérieure étant au moins partiellement reçue dans le moyen de palier (15) dans la position de rangement.

2. Arbre de direction selon la revendication 1, **caractérisé en ce que** le moyen de palier (15) est reçu dans l'arbre extérieur (4) de manière rotative autour de l'axe longitudinal.

3. Arbre de direction selon l'une quelconque des revendications précédentes, **caractérisé en ce que** le moyen de palier (15) est configuré sous forme de douille (15) .

4. Arbre de direction selon l'une quelconque des revendications précédentes, **caractérisé en ce que** l'arbre extérieur (4) et l'arbre intérieur (5) sont reliés par complémentarité de forme pour la transmission d'un couple de rotation dans la position de fonctionnement.

5. Arbre de direction selon l'une quelconque des revendications précédentes, **caractérisé en ce que** l'arbre extérieur (4) présente une section à complémentarité de forme (31) pour la liaison par complémentarité de forme à l'élément coulissant (14) de l'arbre intérieur (5) dans la position de fonctionnement.

6. Arbre de direction selon la revendication 5, **caractérisé en ce que** la section à complémentarité de forme (31) est pratiquée dans l'arbre extérieur (4) par déformation de l'arbre extérieur (4).

7. Arbre de direction selon l'une quelconque des revendications précédentes, **caractérisé en ce que** le moyen de palier (15) comprend un métal ou une matière plastique.

8. Arbre de direction selon l'une quelconque des revendications précédentes, **caractérisé en ce que** l'élément coulissant (14) est configuré sous forme de douille profilée (14), la douille profilée (14) étant reliée de manière immobile à l'arbre intérieur (5).

9. Arbre de direction selon l'une quelconque des revendications précédentes, **caractérisé en ce que** l'élément coulissant (14) est configuré sous forme de surmoulage de l'arbre intérieur.

10. Arbre de direction selon l'une quelconque des revendications précédentes, **caractérisé en ce que** le moyen de palier (15) présente au moins un moyen de positionnement (33) pour positionner la section profilée extérieur (33) en alignement avec la section profilée intérieure (33) le long de l'axe longitudinal (27).

11. Arbre de direction selon la revendication 10, **caractérisé en ce que** le moyen de positionnement (33) est configuré sous forme de saillie.

12. Arbre de direction selon l'une quelconque des revendications précédentes, **caractérisé en ce que** l'arbre extérieur (4) est agencé dans une étoile d'encliquetage (6) pour une serrure de direction.

13. Arbre de direction selon la revendication 12, **caractérisé en ce que** l'étoile d'encliquetage (6) présente un profil creux avec un axe longitudinal et plusieurs évidements d'encliquetage (35), les évidements d'encliquetage (35) pouvant être mis en prise avec un verrou de blocage de la serrure de direction pouvant être transféré dans une position de verrouillage ou de déverrouillage.

14. Colonne de direction (1) pour un véhicule automobile, comprenant un tube d'enveloppe intérieur (8) dans lequel un arbre de direction (4, 5) est monté de manière rotative, et une unité d'enveloppe extérieure (9) dans laquelle le tube d'enveloppe intérieur (8) est maintenu, **caractérisée en ce que** l'arbre de direction (4, 5) est configuré selon l'une quelconque des revendications 1 à 13.
